# EUROPÄISCHE PATENTSCHRIFT

(11) **EP 1 611 519 B1**
(45) Veröffentlichungstag und Bekanntmachung des Hinweises auf die Patenterteilung: **10.10.2007**
(21) Anmeldenummer: 04709545.0
(22) Anmeldetag: 10.02.2004
(51) Int. Cl.: G06F 13/42

(54) **ZEITGESTEUERTES BETRIEBSSYSTEM FÜR ECHTZEITKRITISCHE ANWENDUNGEN**
TIMED OPERATING SYSTEM FOR REAL TIME-CRITICAL APPLICATIONS
SYSTEME D'EXPLOITATION BASE SUR LE TEMPS DESTINE A DES APPLICATIONS CRITIQUES EN TEMPS REEL

(30) Priorität: 08.04.2003 AT 5432003
(43) Veröffentlichungstag der Anmeldung: 04.01.2006
(73) Patentinhaber: TTTech Computertechnik AG, 1040 Wien (AT)
(72) Erfinder: GLÜCK, Martin, A-2244 Spannberg (AT); TANZER, Christian, A-1130 Wien (AT); SCHLATTERBECK, Ralf, A-3411 Klosterneuburg (AT); POLEDNA, Stefan, A-3400 Klosterneuburg (AT)
(74) Vertreter: Patentanwaltskanzlei Matschnig
(86) Internationale Anmeldenummer: PCT/AT2004/000044
(87) Internationale Veröffentlichungsnummer: WO 2004/090734

(56) Entgegenhaltungen:
- US-A- 5 485 602
- US-A- 5 887 143
- US-A1- 2003 041 224
- US-B1- 6 279 058

## Beschreibung

Die Erfindung betrifft ein Verfahren zum zeitgesteuerten Betrieb eines Netzknotens eines verteilten Computersystems mit zumindest zwei Netzknoten, welche zum gegenseitigen Nachrichtenaustausch mittels eines zeitgesteuerten Übertragungsprotokolls eingerichtet sind, wobei eine dem zeitgesteuerten Übertragungsprotokoll zugrundliegende Zeitbasis von einem globalen Zeitgeber des Computersystems bestimmt ist, und eine lokale Tasksteuerung die Abarbeitung von Tasks zumindest anhand zumindest eines lokalen Zeitsignals zumindest eines lokalen Zeitgebers steuert.

Weiters betrifft die Erfindung ein Betriebsystem zum zeitgesteuerten Betrieb eines Netzknotens eines verteilten Computersystems mit zumindest zwei Netzknoten, welche zum gegenseitigen Nachrichtenaustausch mittels eines zeitgesteuerten Übertragungsprotokolls eingerichtet sind, wobei die dem zeitgesteuerten Übertragungsprotokoll zugrundliegende Zeitbasis von einem globalen Zeitgeber des Computersystems bestimmt ist, und eine lokale Tasksteuerung zur Steuerung der Abarbeitung von Tasks zumindest anhand zumindest eines lokalen Zeitsignals zumindest eines lokalen Zeitgebers vorgesehen ist.

Verteilte Computersysteme mit zeitgesteuerten Übertragungsprotokollen und einer globalen Zeitbasis sind in großer Zahl und vor allem in Zusammenhang mit fehlertoleranten Echtzeitanwendungen bekannt geworden, siehe hierzu auch die WO 02/075557 A1 oder die WO 02/079972 der Anmelderin.

Auch zeitgesteuerte Übertragungsprotokolle bzw. Kommunikationssysteme zur Übertragung von Nachrichten zwischen Netzknoten eines verteilten Computersystems sind dem Fachmann in großer Zahl bekannt. Ein derartiges Protokoll bzw. Kommunikationssystem stellt beispielsweise das sogenannte Time Division Multiple Access Verfahren oder kurz TDMA-Verfahren dar. Bei TDMA handelt es sich um ein Zeitmultiplex-Verfahren, bei dem jedem Knoten eine feste Anzahl von TDMA-Slots pro »TDMA-Umlauf« zugeordnet wird.

Beim Zeitmultiplex erfolgt die Datenübertragung zwischen den Netzknoten in einem definierten Multiplexrahmen, in dem für jeden Übertragungskanal ein fester Zeitschlitz vorhanden ist. Die einzelnen Zeitschlitze werden nacheinander abgearbeitet. Ist eine Zeiteinheit abgelaufen, wird die Übertragung für den aktiven Kanal kurzfristig unterbrochen; die Übertragungsbandbreite steht dann dem nächsten Benutzer zur Verfügung.

Unter einem TDMA-Slot wird ein Zeitintervall verstanden mit einem auf einer systemweit bekannten Zeitbasis definierten Beginn und Ende. Diese innerhalb des verteilten Computersystems allen Netzknoten bekannte Zeitbasis wird im folgenden als globale Zeitbasis bzw. "globaler Zeitgeber" bezeichnet. Der TDMA-Slot ist allen Netzknoten in gleicher Weise bekannt. TDMA-Slots sind zueinander disjunkt, überlappen sich also nicht. In einem TDMA-Slot kann maximal ein Netzknoten eine Übertragung durchführen. Die TDMA-Slots können nach den Bedürfnissen einzelner Netzknoten ausgerichtet sein. Wenn diese Bedürfnisse bekannt sind, kann mit TDMA eine hohe Buslast ohne Indeterminismus erzielt werden. Wie auch bei anderen konfliktvermeidenden Schemata, müssen bei TDMA alle Stationen vollständig zeitsynchronisiert sein.

Unter Task wird in diesem Dokument ein Auftrag bzw. eine definierte Anweisung, eine Arbeit auszuführen verstanden. Aufträge sind z. B. Kopieren, Laden, Speichern, Senden, Empfangen, etc. Ein Task kann auch in Teilaufträge aufgeteilt werden, die nacheinander, bzw. ineinander verzahnt, abgearbeitet werden können. Weiters kann es sich bei den Tasks auch um komplexe Aufträge (verkettete Programmausführung) als auch um einfache Befehle handeln.

Ein Betriebssystem der eingangs genannten Art ist beispielweise unter der Bezeichnung "OSEKtime OS.1" bekannt geworden - siehe hierzu die auch unter der Webadresse www.osek-vdx.com (am 24. Oktober 2002) zugängliche Veröffentlichung: OSEK/VDX "Time-Triggered Operating System" Version 1.0; 24. Juli 2001.

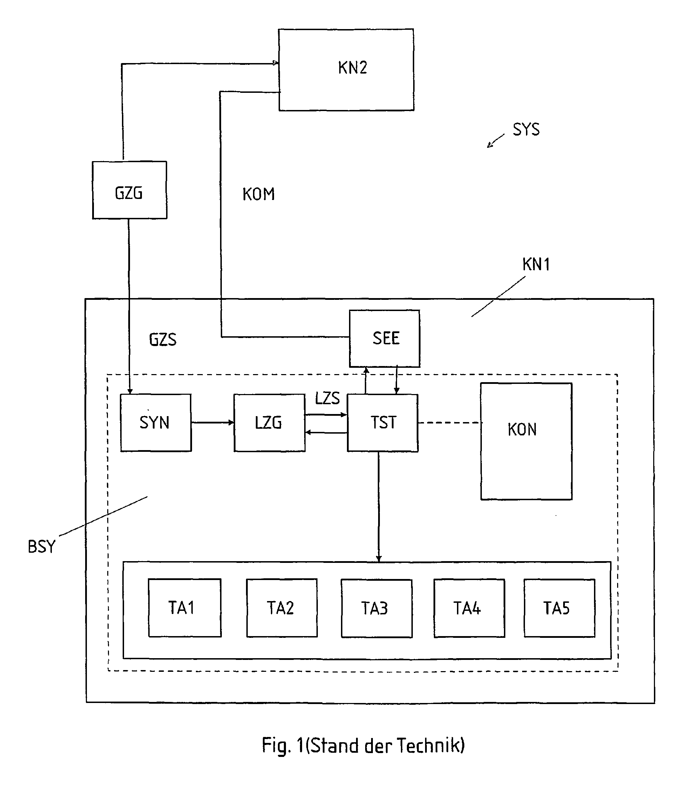

Gemäß Fig. 1 erfolgt bei dem soeben genannten Betriebsystem die Abarbeitung von Tasks TA1, TA2, TA3, TA4, TA5 eines Knotens KN1 eines verteilten Computersystems SYS zeitgesteuert, wobei das OSEKtime Betriebssystem BSY auf einer im voraus festgelegten Zuordnung von Tasks TA1, TA2, TA3, TA4, TA5 zu Zeitintervallen basiert. Anhand der zeitlichen Abstimmung von Taskcharakteristika wird ein "Einsatzplan" für die Tasks TA1, TA2, TA3, TA4, TA5 erstellt. Die zeitliche Steuerung der Tasks erfolgt bei dem bekannten Betriebssystem BSY durch einen lokalen Zeitgeber LZG des Netzknotens KN1. Der lokale Zeitgeber LZG - eine netzknoteninterne Uhr - wird mit einer globalen Zeitbasis GZG eines zeitgesteuerten Echtzeitkommunikationssystems KOM zur Nachrichtenübertragung zwischen Knoten KN1, KN2 des Computersystems SYS nach dem Systemstart des Netzknotens KN1 synchronisiert.

Der globale Zeitgeber GZG kann hierzu seine Zeitsignale GZS an eine Synchronisationseinheit SYN übermitteln, welche anhand der von der globalen Zeitquelle GZS empfangenen Signale GZS den nachgeschalteten internen Zeitgeber LZG des Netzknotens KN1 synchronisiert. Eine netzknoteninterne Tasksteuerung TST, welche den Ablauf der Tasks TA1, TA2, TA3, TA4, TA5 in dem Netzknoten KN1 steuert, empfängt bei dem bekannten Betriebssystemen BSY für echtzeitkritische Anwendungen somit nur von dem lokalen Zeitgeber LZG ein Zeitsignal LZS.

Ein Nachteil der bekannten Lösungen besteht darin, dass erst eine Synchronisierung des lokalen Zeitgebers LZG mit dem globalen Zeitgeber GZG erfolgen muss, bevor ein korrekter Ablauf von Tasks TA1, TA2, TA3, TA4, TA5, deren Ablauf von dem globalen Zeitgeber GZG abhängen, gewährleistet werden kann.

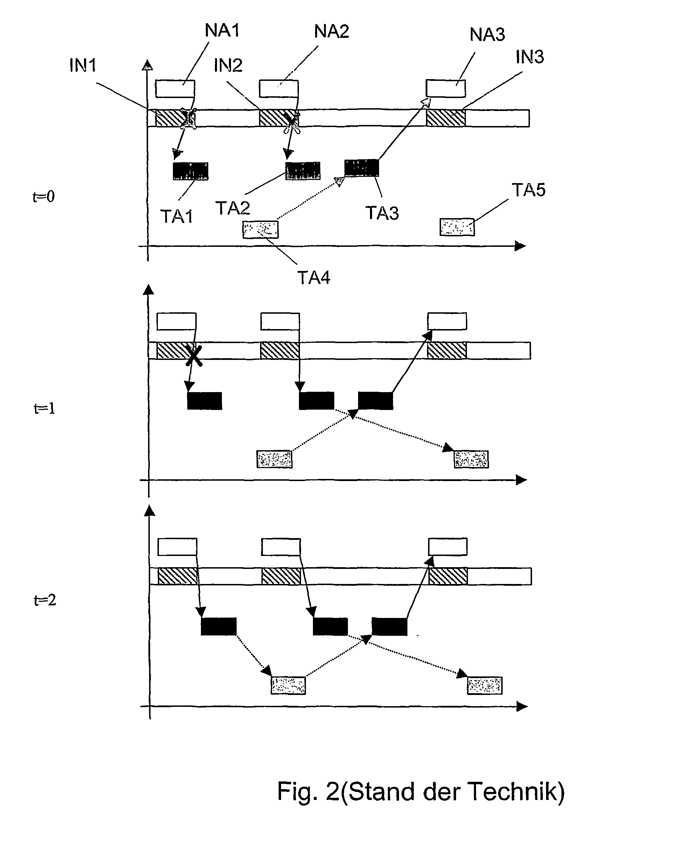

Da der Ablauf der Tasks TA1, TA2, TA3, TA4, TA5 bei der bekannten Lösung in dem Netzknoten KN1 von der netzknoteninternen lokalen Zeitquelle LZG gesteuert wird, können Tasks TA5, TA6, die auf zwischen den Netzknoten KN1, KN2 mittels des zeitgesteuerten Kommunikationssystems KOM übertragene Nachrichten NA1, NA2, NA3 angewiesen sind, bei einem Systemstart (t=0) noch nicht auf diese Nachrichten zugreifen (Fig. 2). Dies ist dadurch bedingt, dass Tasks TA1, TA2, TA3, die von dem Kommunikationssystem KOM Nachrichten NA1, NA2, NA3 empfangen und an andere Tasks TA4, TA5 weiterleiten können, von der lokalen Zeitquelle LZG des Netzknotens KN1 gesteuert werden, wobei in den Intervallen IN1, IN2, IN3 kein Zugriff auf die Nachrichten NA1, NA2, NA3 des Kommunikationssystems erfolgen kann. Erst nach Synchronisierung (t=2) der lokalen Zeitquelle LKZ mit der globalen Zeitquelle GZG des Kommunikationssystems KOM können die Tasks TA1, TA2, TA3 auf die zwischen den Netzknoten übertragenen Nachrichten NA1, NA2, NA3 zugreifen.

Es ist daher eine Aufgabe der Erfindung den oben genannten Nachteil des Stands der Technik zu überwinden.

Diese Aufgabe wird mit einem Verfahren der eingangs genannten Art erfindungsgemäß dadurch gelöst, dass die Tasksteuerung sowohl von dem globalen Zeitgeber als auch von dem zumindest einen lokalen Zeitgeber je zumindest ein Zeitsignal empfängt, wobei sowohl dem globalen Zeitgeber als auch dem lokalen Zeitgeber je zumindest ein Task in dem Netzknoten zugeordnet ist, und die Abarbeitung dieser Tasks unter Verwendung des zumindest einen Zeitsignals des jeweils zugeordneten Zeitgebers erfolgt.

Es ist ein Verdienst der Erfindung bereits bei Systemstart einen korrekten Ablauf aller Tasks in dem Netzknoten zu gewährleisten, da die Tasks, welche auf zwischen den Netzknoten übertragene Nachrichten zugreifen, von vorneherein dem globalen Zeitgeber zugeordnet werden können. Somit muss bei Systemstart keine Synchronisation des lokalen Zeitgebers mit dem globalen Zeitgeber abgewartet werden, bevor diese Tasks auf zwischen den Netzknoten übertragene Nachrichten zugreifen können.

In einer bevorzugten Ausführungsform der Erfindung werden der zumindest eine lokale Zeitgeber und der globale Zeitgeber miteinander synchronisiert, wobei der lokale Zeitgeber und der globale Zeitgeber auch während der Systemlaufzeit miteinander synchronisiert werden können.

Zur Durchführung des erfindungsgemäßen Verfahrens eignet sich insbesondere ein Betriebssystem der eingangs genannten Art, bei welchem die Tasksteuerung dazu eingerichtet ist, sowohl von dem globalen Zeitgeber als auch dem zumindest einen lokalen Zeitgeber je zumindest ein Zeitsignal zu empfangen, wobei sowohl dem globalen Zeitgeber als auch dem lokalen Zeitgeber je zumindest ein Task in dem Netzknoten zuortbar ist, und die Tasksteuerung weiters dazu eingerichtet ist, die Abarbeitung dieser Tasks unter Verwendung des zumindest einen Zeitsignals des jeweils zugeordneten Zeitgebers zu steuern.

Vorteilhafterweise ist das Betriebssystem dazu eingerichtet, den zumindest einen lokalen Zeitgeber und den globalen Zeitgeber miteinander zu synchronisieren.

Weiters kann das Betriebssystem dazu eingerichtet sein, den zumindest einen lokalen Zeitgeber und den globalen Zeitgeber während der Systemlaufzeit des Netzknotens miteinander zu synchronisieren.

Darüber hinaus kann die Tasksteuerung dazu eingerichtet sein, sowohl von dem globalen Zeitgeber als auch von dem zumindest einen lokalen Zeitgeber Zeitsignale gleichzeitig zu empfangen.

Die Erfindung samt weiterer Vorteile wird im Folgenden anhand einiger nicht einschränkender Ausführungsbeispiele näher erläutert, welche in der Zeichnung dargestellt sind. In dieser zeigen:
- Fig. 3: ein Blockdiagramm eines erfindungsgemäßen Betriebssystems;
- Fig. 4: eine Zuordnungstabelle von Zeitgebern zu Tasks und
- Fig. 5: ein Ablaufdiagramm eines Systemstarts eines erfindungsgemäßen Betriebssystems.

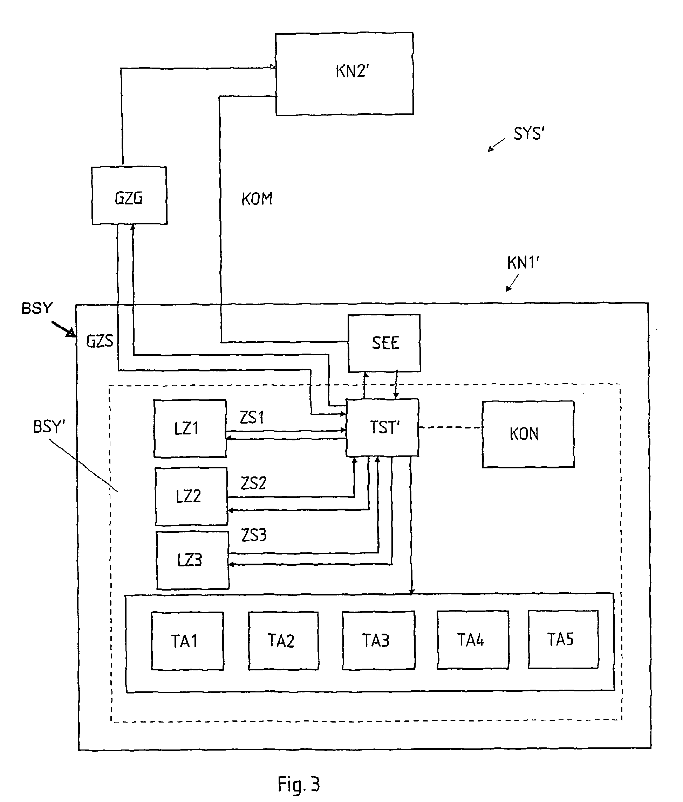

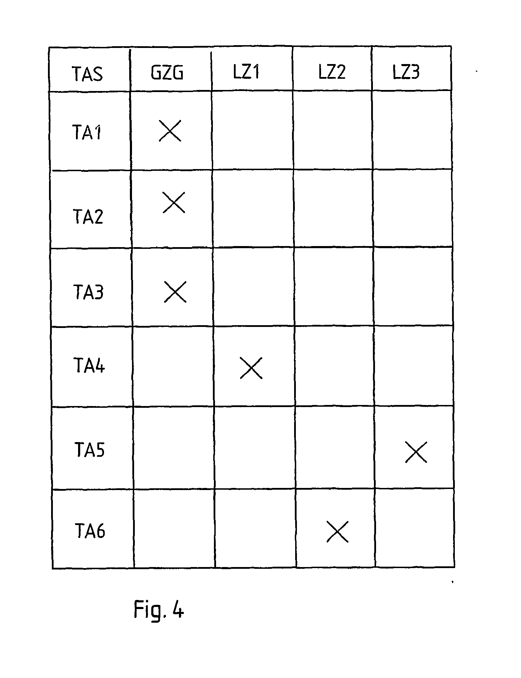

Gemäß Fig. 3 weist ein erfindungsgemäßes Betriebssystem BSY' eines Netzknotens KN1' eines verteilten Computersystems SYS eine oder mehrere lokale Zeitgeber LZ1, LZ2, LZ3 sowie eine im Tasksteuerung TST zur Aktivierung einzelner Tasks TA1, TA2, TA3, TA4, TA5 in dem Netzknoten KN1' auf. Weiters kann die Tasksteuerung auf Konfigurationsdaten KON zugreifen, beispielsweise Tabellen, die Daten zur Steuerung der einzelnen Tasks erhalten (Fig. 4).

Im Folgenden wird die netzknoteninterne Tasksteuerung gemäß dem auf diesem Gebiet der Technik üblichen Sprachgebrauch als "Taskscheduler" bezeichnet - siehe hierzu auch das bereits oben zitierte Dokument "Time-Triggered Operating System".

Der Task Scheduler ist dazu eingerichtet sowohl von dem bzw. den lokalen Zeitgebern als auch von dem globalen Zeitgeber GZG Zeitsignale ZS1, ZS2, ZS3, ZS4, auch gleichzeitig, zu empfangen. Die Übertragung der Zeitsignale ZS1, ZS2, ZS3, GZS von den einzelnen Zeitgebern LZ1, LZ2, LZ3, GSZ an den Task Scheduler TST kann über parallele Übertragungskanäle erfolgen.

Der globale Zeitgeber GZG dient als Zeitbasis für ein zeitgesteuertes Echtzeitkommunikationssystem KOM bzw. Übertragungsprotokoll zwischen Netzknoten KN1', KN2' des verteilten Computersystems SYS, beispielsweise das bereits eingangs erwähnte TDMA Protokoll, bzw. das TTP- , das FlexRay-, oder das TT-CAN-Protokoll. Jeder der Netzknoten weist eine Sende/Empfangseinheit SEE auf über welche er über das Kommunikationssystem KOM übertragene Nachrichten senden bzw. empfangen kann. Die Steuerung dieser Sende/Empfangseinheit SEE erfolgt wiederum mittels entsprechender Tasks.

Gemäß Fig. 4 können sowohl dem globalen Zeitgeber GZG als auch den lokalen Zeitgebern LZ1, LZ2, LZ3 einzelne Tasks TAS TA1, TA2, TA3, TA4, TA5, TA6 in Form einer Tabelle zugeordnet sein. Diese Tabelle bzw. Zuordnungsvorschrift kann in einer Speichereinheit des Netzknotens KN1' oder aber auch direkt in dem Task Scheduler abgelegt sein.

Der Task Scheduler steuert unter Berücksichtigung der soeben erwähnten Zuordnungsvorschrift bzw. Tabelle den Ablauf der einzelnen Tasks TA1, TA2, TA3, TA4, TA5, TA6 in dem Netzknoten anhand der von den Zeitgebern GZG, LZ1, LZ2, LZ3 empfangenen Signale. Somit wird durch die Zuordnungsvorschrift festgelegt, welcher Zeitgeber für den Ablauf eines Tasks maßgeblich ist. Hierbei kann es auch Tasks geben, die auf mittels des Kommunikationssystems SYS übertragene Nachrichten NA1, NA2, NA3 zugreifen. Diese Tasks TA1, TA2, TA3 sind dann vorteilhafterweise dem globalen Zeitgeber GZG zugeordnet.

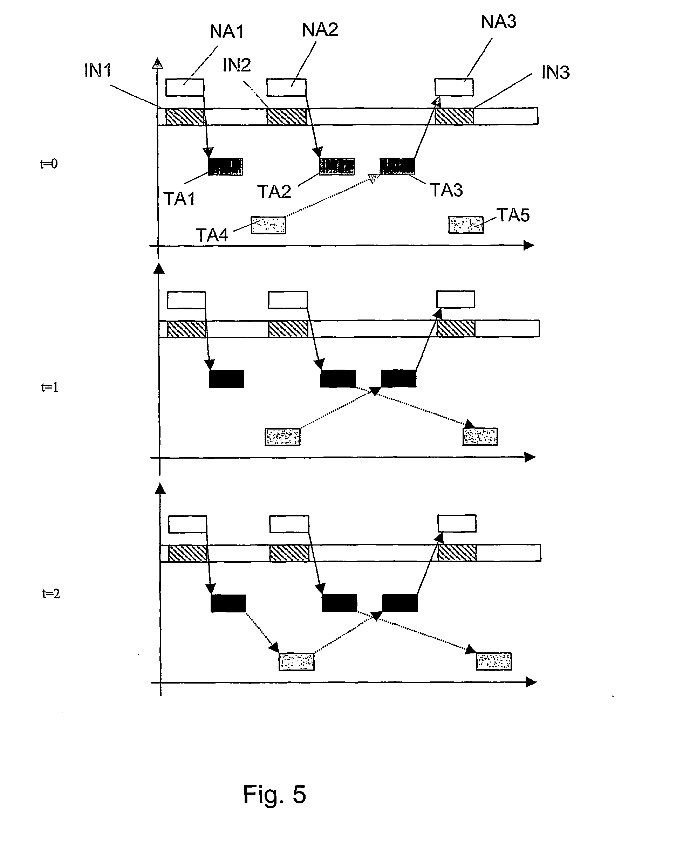

Ein Vorteil der soeben erwähnten Lösung liegt gemäß Fig. 5 darin, dass die Tasks TA1, TA2, TA3 die auf das zeitgesteuerte Kommunikationssystem zwischen den Netzknoten zugreifen, d. h. Nachrichten NA1, NA2, NA3 von dem Kommunikationssystem empfangen bzw. über dieses senden, immer mit dem Kommunikationssystem synchronisiert sind, wenn diese Tasks von der Zeitquelle des Kommunikationssystems (dem globalen Zeitgeber) aktiviert werden. (Ein Zugriff auf die über das Kommunikationssystem übertragenen Nachrichten NA1, NA2, NA3 kann, wie bereits oben erwähnt, während der Intervalle IN1, IN2, IN3 nicht erfolgen.)

Die von den Tasks TA1, TA2, TA3 empfangenen Nachrichten NA1, NA2, NA3 können an Tasks TA4, TA5 von Applikationen weitergeleitet werden, welche die Nachrichten NA1, NA2, NA3 des zeitgesteuerten Kommunikationssystems verwenden, wobei die Tasks TA4, TA5 anhand von Zeitsignalen des oder der lokalen Zeitgeber(s) gesteuert sind.

Daher kann es in diesem Fall, selbst wenn die lokale(n) Zeitquelle(n) noch nicht mit der Zeitquelle des Kommunikationssystems synchronisiert ist (sind) (t=0 und t=1), nie zu einem Zugriffskonflikt mit dem zeitgesteuerten Kommunikationssystem kommen, und die Nachrichten den Tasks zur Verfügung gestellt werden, welche diese Nachrichten benötigen.

Der globale Zeitgeber und der zumindest eine lokale Zeitgeber können auch miteinander synchronisiert werden. Ein Synchronisierungsprozess zwischen dem globalen Zeitgeber und dem lokalen Zeitgeber kann beispielsweise bei Systemstart (t=0) in Gang gesetzt werden und zu einem Zeitpunkt (t=3) abgeschlossen sein. Natürlich kann der Synchronisierungsprozess auch während der Systemlaufzeit des Netzknotens, also zu einem beliebigen Zeitpunkt nach dem Systemstart, in Gang gesetzt werden.

Zur Synchronisierung der globalen Zeitquelle, also des Zeitgebers des Kommunikationssystems und dem bzw. den lokalen Zeitgeber(n) können an sich bekannte Synchronisationsverfahren verwendet werden. Ein derartiges Verfahren ist beispielsweise aus der WO 01/84286 A2 der Anmelderin bekannt geworden.

## Patentansprüche

1. Verfahren zum zeitgesteuerten Betrieb eines Netzknotens (KN1, KN1', KN2, KN2') eines verteilten Computersystems (SYS, SYS') mit zumindest zwei Netzknoten (KN1, KN1', KN2, KN2'), welche zum gegenseitigen Nachrichtenaustausch mittels eines zeitgesteuerten Übertragungsprotokolls (KOM) eingerichtet sind, wobei eine dem zeitgesteuerten Übertragungsprotokoll (KOM) zugrundliegende Zeitbasis von einem globalen Zeitgeber (GZG) des Computersystems (SYS, SYS') bestimmt ist, und eine lokale, netzknoteninterne Tasksteuerung (TST, TST') die Abarbeitung von Tasks (TAS, TA1, TA2, TA3, TA4, TA5) innerhalb eines Netzknotens (KN1, KN1', KN2, KN2') zumindest anhand zumindest eines lokalen Zeitsignals (LZS, ZS1, ZS2, ZS3) zumindest eines lokalen Zeitgebers (LZG, LZ1, LZ2, LZ3) steuert, **dadurch gekennzeichnet, dass** die Tasksteuerung (TST') sowohl von dem globalen Zeitgeber (GZG) als auch von dem zumindest einen lokalen Zeitgeber (LZ1, LZ2, LZ3) je zumindest ein Zeitsignal (GZS, ZS1, ZS2, ZS3) empfängt, wobei sowohl dem globalen Zeitgeber (GZG) als auch dem zumindest einen lokalen Zeitgeber (LZ1, LZ2, LZ3) je zumindest ein Task (TAS, TA1, TA2, TA3, TA4, TA5) in dem Netzknoten (KN1, KN2) zugeordnet ist, und die Abarbeitung dieser Tasks (TAS, TA1, TA2, TA3, TA4, TA5) unter Verwendung des zumindest einen Zeitsignals (GZS, ZS1, ZS2, ZS3) des jeweils zugeordneten Zeitgebers (GZG, LZG, LZ1, LZ2, LZ3) erfolgt.

2. Verfahren nach Anspruch 1, **dadurch gekennzeichnet, dass** der zumindest eine lokale Zeitgeber (LZG, LZ1, LZ2, LZ3) und der globale Zeitgeber (GZG) miteinander synchronisiert werden.

3. Verfahren nach Anspruch 1 oder 2, **dadurch gekennzeichnet, dass** der zumindest eine lokale Zeitgeber (LZG, LZ1, LZ2, LZ3) und der globale Zeitgeber (GZG) während der Systemlaufzeit des Netzknotens (KN1') miteinander synchronisiert werden.

4. Betriebsystem (BSY, BSY') zum Ausführen des Verfahrens nach Anspruch 1.

5. Betriebssystem nach Anspruch 4, **dadurch gekennzeichnet, dass** es dazu eingerichtet ist, den zumindest einen lokalen Zeitgeber (LZ1, LZ2, LZ3) und den globalen Zeitgeber (GZG) miteinander zu synchronisieren.

6. Betriebssystem nach Anspruch 4 oder 5, **dadurch gekennzeichnet, dass** es dazu eingerichtet ist, den zumindest einen lokalen Zeitgeber (LZ1, LZ2, LZ3) und den globale Zeitgeber (GZG) während der Systemlaufzeit des Netzknotens (KN1, KN1', KN2, KN2') miteinander zu synchronisieren.

7. Betriebssystem nach einem der Ansprüche 4 bis 5, **dadurch gekennzeichnet, dass** die Tasksteuerung dazu eingerichtet ist, sowohl von dem globalen Zeitgeber als auch von dem zumindest einen lokalen Zeitgeber Zeitsignale gleichzeitig zu empfangen.

## Claims

1. Method for the time-controlled operation of a hub (KN1, KN1', KN2, KN2') of a shared computer system (SYS, SYS') with at least two hubs (KN1, KN1', KN2, KN2') which are set up for two-way information exchange by means of a time-controlled transmission protocol (KOM), such that a time basis underlying the time-controlled transmission protocol (KOM) is determined by a global timer (GZG) of the computer system (SYS, SYS'), and a local task control (TST, TST') internal to the hub controls the execution of tasks (TAS, TA1, TA2, TA3, TA4, TA5) inside a hub (KN1, KN1', KN2, KN2') by means of at least one local time signal (LZS, ZS1, ZS2, ZS3), **characterised in that** the task control (TST') receives at least one time signal (GZS, ZS1, ZS2, ZS3) each from both the global timer (GZG) and the minimum one local timer (LZ1, LZ2, LZ3), such that at least one task each (TAS, TA1, TA2, TA3, TA4, TA5) in the hub (KN1, KN2) is allocated to both the global timer (GZG) and the minimum one local timer (LZ1, LZ2, LZ3), and the execution of these tasks (TAS, TA1, TA2, TA3, TA4, TA5) takes place by use of the minimum one time signal (GZ3, ZS1, ZS2, ZS3) of the timer (GZG, LZG, LZ1, LZ2, LZ3) allocated in each case.

2. Method according to claim 1, **characterised in that** the minimum one local timer (LZG, LZ1, LZ2, LZ3) and the global timer (GZG) are synchronised with each other.

3. Method according to claim 1 or 2, **characterised in that** the minimum one local timer (LZG, LZ1, LZ2, LZ3) and the global timer (GZG) are synchronised with each other during the system runtime of the hub (KN1').

4. Operating system (BSY, BSY') for carrying out the method according to claim 1.

5. Operating system according to claim 4, **characterised in that** it is set up in order to synchronise the minimum one local timer (LZ1, LZ2, LZ3) and the global timer (GZG) with each other.

6. Operating system according to claim 4 or 5, **characterised in that** it is set up in order to synchronise the minimum one local timer (LZ1, LZ2, LZ3) and the global timer (GZG) with each other during the system runtime of the hub (KN1, KN1', KN2, KN2').

7. Operating system according to one of the claims 4 to 5, **characterised in that** the task control is set up in order to receive time signals from both the global timer and the minimum one local timer concurrently.

## Revendications

1. Procédé pour l'exploitation basée sur une commande dans le temps d'un noeud de réseau (KN1, KN1', KN2, KN2') d'un système informatique distribué (SYS, SYS') avec au moins deux noeuds (KN1, KN1', KN2, KN2'), lesquels noeuds sont arrangés pour permettre les échanges réciproques de messages au moyen d'un protocole de transmission commandé sur la base du temps (KOM)), où une base temporelle sur laquelle se fonde le protocole de transmission commandée sur la base du temps est définie par une horloge globale (GZG) du système informatique (SYS, SYS') et une commande de cycles locale, interne au noeud de réseau (TST, TST') commande le lancement de tâches (TAS, TA1, TA2, TA3, TA4, TA5) à l'intérieur d'un noeud de réseau (KN1, KN1', KN2, KN2') au moins en s'appuyant sur au moins un signal de temps local (LZS, ZS1, ZS2, ZS3,) au moins d'une horloge locale (LZG, LZ1, LZ2, LZ3), **caractérisé en ce que** la commande de cycles (TST) reçoit à la fois de l'horloge globale (GZG) et également de l'au moins une horloge locale (LZ1, LZ2, LZ3) respectivement au moins un signal de temps (GZS, ZS1, ZS2, ZS3), où respectivement au moins une tâche (TAS, TA1, TA2, TA3, TA4, TA5) dans le noeud de réseau (KN1, KN2) est affectée à la fois à l'horloge globale (GZG) et également à l'au moins une horloge locale (LZ1, LZ2, LZ3), et le lancement de ces tâches (TAS, TA1, TA2, TA3, TA4, TA5) est effectué en utilisant l'au moins un signal de temps (GZS, ZS1, ZS2, ZS3) de l'horloge respectivement affectée (GZG, LZG, LZ1, LZ2, LZ3).

2. Procédé selon la revendication 1, **caractérisé en ce que** l'au moins une horloge locale (LZG, LZ1, LZ2, LZ3) et l'horloge globale (GZG) sont synchronisées l'une avec l'autre.

3. Procédé selon la revendication 1 ou 2, **caractérisé en ce que** l'au moins une horloge locale (LZG, LZ1, LZ2, LZ3) et l'horloge globale (GZG) sont synchronisées l'une avec l'autre pendant le temps de propagation réseau du noeud de réseau (KN1').

4. Système d'exploitation (BSY, BSY') pour exécuter le procédé selon la revendication 1.

5. Système d'exploitation selon la revendication 4, **caractérisé en ce qu'**il est arrangé pour synchroniser l'une avec l'autre l'au moins une horloge locale (LZ1, LZ2, LZ3) et l'horloge globale (GZG).

6. Système d'exploitation selon la revendication 4 ou 5, **caractérisé en ce qu'**il est arrangé pour synchroniser l'une avec l'autre l'au moins une horloge locale (LZ1, LZ2, LZ3) et l'horloge globale (GZG) pendant le temps de propagation réseau du noeud de réseau (KN1, KN1', KN2, KN2').

7. Système d'exploitation selon la revendication 4 à 5, **caractérisé en ce que** la commande de cycles est arrangée pour recevoir en même temps les signaux de temps à la fois de l'horloge globale et également de l'au moins une horloge locale.
